# EUROPÄISCHE PATENTSCHRIFT

(11) **EP 1 668 270 B1**
(45) Veröffentlichungstag und Bekanntmachung des Hinweises auf die Patenterteilung: **03.10.2012**
(21) Anmeldenummer: 04738645.3
(22) Anmeldetag: 09.06.2004
(51) Int. Cl.: F16D 49/08, F16D 49/20

(54) **VORRICHTUNG ZUR POSITIONSEINHALTUNG EINER DREHBAR ODER VERSCHIEBBAR GELAGERTEN WELLE**
DEVICE FOR MAINTAINING THE POSITION OF A ROTATABLY OR DISPLACEABLY MOUNTED SHAFT
DISPOSITIF POUR MAINTENIR EN POSITION UN ARBRE LOG PIVOTANT OU COULISSANT

(30) Priorität: 24.09.2003 DE 10344211
(43) Veröffentlichungstag der Anmeldung: 14.06.2006
(73) Patentinhaber: ROBERT BOSCH GMBH, 70442 Stuttgart (DE)
(72) Erfinder: DREWE, Ingo, 77815 Buehl (DE); MEYER, Christian, 76228 Karlsruhe-Wolfartsweier (DE); SCHNEIDER, Guido, 58453 Witten (DE)
(86) Internationale Anmeldenummer: PCT/DE2004/001193
(87) Internationale Veröffentlichungsnummer: WO 2005/040630

(56) Entgegenhaltungen:
- EP-A- 0 965 764
- DE-A- 3 028 012
- DE-A- 3 809 555
- US-A- 4 573 423
- PATENT ABSTRACTS OF JAPAN Bd. 0101, Nr. 05 (M-471), 19. April 1986 (1986-04-19) & JP 60 237230 A (MATSUSHITA DENKI SANGYO KK), 26. November 1985 (1985-11-26)

## Beschreibung

### Stand der Technik

Die Erfindung betrifft eine Vorrichtung zur Positionseinhaltung einer drehbar oder axial verschiebbar gelagerten Welle, insbesondere einer Ankerwelle nach der Gattung des unabhängigen Anspruchs 1.

Mit der DE 30 30 767 C2 ist eine Sicherheitskurbel für handgetriebene Hebezeuge mit einer selbsttätigen Rücklaufsicherung bekannt geworden. Hierbei ist zwischen der Kurbel und einem diese umgebenden Gehäuse ein doppelwirkendes Schraubenfedergesperre angeordnet, das automatisch im Lastzustand des Hebezeugs ein Zurückdrehen der Kurbel entgegen der Heberichtung verhindert. Eine solche Lastmomentsperre hat den Nachteil, dass diese nur ab einer konstruktionsbedingten Lastschwelle ausgelöst wird. Es besteht beispielsweise keine Möglichkeit die Welle im unbelasteten Zustand drehsicher zu blockieren. Außerdem eignet sich eine solche beschriebene Sicherheitsvorrichtung nicht für die Positionseinhaltung einer frei gelagerten Welle, wie beispielsweise einer Ankerwelle eines Elektromotors, bei der keine koaxiale Gehäusewand in unmittelbarer Nähe zur Oberfläche der Welle zur Verfügung steht.

Die EP 0965 764 A2 zeigt eine Sperrvorrichtung bei der ein pneumatisch betätigter Aktor auf die Enden einer Schlingfeder drückt, um deren Verdrehen gegenüber einer von dieser umschlungenen welle zu verhindern.

### Vorteile der Erfindung

Die erfindungsgemäße Vorrichtung zur Positionseinhaltung einer drehbar oder axial verschiebbar gelagerten Welle mit den kennzeichnenden Merkmalen des unabhängigen Anspruchs 1 hat den Vorteil, dass die Welle unabhängig vom Betriebszustand und vom Lastmoment jederzeit zuverlässig motorisch gegen ein Verdrehen gesichert werden kann. Eine solche aktive Drehsicherung kann unabhängig von der Ausformung des Gehäuses der Wellenlagerung auch bei kleinem Bauraumbedarf eingesetzt werden, wobei die Welle stufenlos in jeder Lage ohne manuelle Kraftaufwendung gesichert werden kann. Der Kraftaufwand für das Haltemoment der Welle kann durch die Wahl der Anzahl der Umschlingungen des Umschlingungskörpers verschiedenen Anwendungen des Elektromotors angepasst werden. Dabei werden die beiden Enden des Umschlingungskörpers jeweils derart mit einer Kraft beaufschlagt, dass diese eine resultierende Kraft auf die Welle ausüben, die die Welle radial gegenüber einem Wellenlager auslenkt. Durch eine solche Verkippung von der Welle gegen das Lager beim Betätigen des Ausrücksystems wird die Klemmwirkung verstärkt, wodurch sich der Kraftbedarf zur Drehsicherung zusätzlich reduziert.

Durch die in den Unteransprüchen aufgeführten Maßnahmen ergeben sich vorteilhafte Weiterbildungen und Verbesserungen der im Anspruch 1 angegebenen Merkmale. Durch die Verwendung eines Schlingbandes oder einer Schraubenfeder als Umschlingungskörper kann durch geringe Kraftaufwendung an den beiden Enden des Umschlingungskörpers aufgrund der relativ großen Reibfläche ein relativ großes Sperrmoment erzeugt werden. Dabei ist die Abnutzung eines solchen Schlingbandes oder Schraubenfeder relativ gering, was zu einer langen Lebensdauer der Sperrvorrichtung führt.

Ist die Oberfläche der Welle oder des Umschlingungskörpers mit einem Werkstoff mit hohem Reibwert überzogen, beispielsweise durch Vulkanisieren derselben, kann die aufzuwendende Haltekraft - und dadurch die Dimensionierung des entsprechenden Ausrücksystems - reduziert werden, wodurch Energie und Bauraum eingespart werden.

Eine weitere Reduzierung der Haltekraft lässt sich durch die Verwendung eines Doppel-Schlingbands erzielen, da sich hier die aufzuwendende Haltekraft zwischen den beiden freien Enden und dem Ende mit der Schleife halbiert.

Werden die beiden freien Enden durch die Schleife des dritten Endes durchgeführt, verringert sich dabei die axiale Baulänge des Umschlingungskörpers und damit der Wellenlänge beispielsweise einer Ankerwelle.

Besonders günstig kann der Umschlingungskörper als Draht mit kreisförmigem Querschnitt, oder aber zur Erzielung einer größeren Reibfläche auch als Flachband ausgebildet sein. Prinzipiell kann jeder beliebige Querschnitt verwendet werden, wobei dieser gegebenenfalls einen Mantel aus einem Material höherer Reibung aufweist.

Das Stellglied zur Auslenkung des mindestens einen Endes des Umschlingungskörpers wird vorteilhaft von einem elektrischen, einem pneumatischen oder einem hydraulischen Ausrücksystem betätigt. Besonders vorteilhaft ist hierbei beispielsweise ein elektrisch betätigbarer Hubmagnet oder ein anderer elektrisch aktivierter Aktuator, wie beispielsweise ein Piezoelement.

Um in kurzer Zeit eine große Auslenkung der mindestens zwei Enden des Umschlingungskörpers zu erzielen, ist das Ausrücksystem in einer vorteilhaften Ausführung mit einem Doppelhub ausgestattet, wodurch zwei Stellglieder zeitgleich - insbesondere in Gegenrichtung - verstellt werden können. Eine solche symmetrische Auslenkung kann beispielsweise mittels eines Doppelhubmagneten realisiert werden.

Bei einer anderen Ausführung kann zwischen den beiden Enden des Umschlingungskörpers beispielsweise ein Keil oder ein Exzenterrad angeordnet werden, die die beiden Enden bei Aktivierung des Ausrücksystems in entgegengesetzter Richtung auslenken.

Dabei kann das Stellglied beispielsweise bei Verwendung eines Hubmagneten einen linearen Stellweg zurücklegen, oder bei der Verwendung eines Exzenterrads oder eines auf der Welle gelagerten Stellglieds eine Drehbewegung ausführen, bei der ebenfalls Kraft auf die Enden des Umschlingungskörpers eingeleitet wird.

Die Verbindung zwischen dem Stellglied und den Enden des Umschlingungskörpers kann dabei derart gestaltet sein, dass das Stellglied entweder eine Zugkraft oder eine Druckkraft auf das federsteife Umschlingungselement ausübt.

Als Alternative zu einem Doppelhubelement kann ein Ende auch als Festlager an einem Gehäuseteil der Wellenlagerung befestigt werden, so dass das Gehäuse die entsprechende Gegenkraft zum Aktuator aufbringt.

In einer bevorzugten Ausgestaltung ist ein Rückstellelement des Stellglieds derart angeordnet, dass beim Anlegen eines Stroms an das Ausrücksystem das Stellglied gegen die Federkraft des Rückstellelements derart betätigt wird, dass zwischen der Oberfläche der Welle und dem Umschlingungskörper ein Reibschluss verhindert wird. Das hat den Vorteil, dass bei Unterbrechung der Stromzufuhr die Welle sofort gegen ein Verdrehen oder Verschieben gesichert wird, da durch das Rückstellelement ein Reibschluss hergestellt wird.

In einer alternativen Ausgestaltung kann das oben genannten Prinzip genau umgekehrt werden, so dass nur beim Anlegen eines Stroms bzw. einer Spannung an das Ausrücksystem ein Reibschluss zwischen der Oberfläche und dem Umschlingungskörper besteht und die Welle im stromlosem Zustand des Ausrücksystems frei beweglich ist.

Werden zwei separate Ausrücksysteme für die beiden Enden des Umschlingungskörpers verwendet, lassen sich diese - je nach zur Verfügung stehendem Bauraum - entweder axial nebeneinander, oder auch axial in einer Ebene anordnen, wodurch entweder die radiale oder die axiale Baugröße der Antriebseinheit reduziert werden kann.

Die Erfindung umfasst ebenso eine weitergehende Ausführungsform, bei der wie bei einer mehrlagig bewickelten Seiltrommel einer Seilwinde sich der Außendruck auf die Welle auch durch die zweite, dritte und nachfolgenden Lagen weiter akkumulierend vergrößert, wobei dieser Effekt zu einer Effizienzsteigerung des Systems umgesetzt wird. In dieser Ausführung befindet sich mindestens ein weiterer Umschlingungskörper oder Schraubenfeder an gleicher axialer aber in radialer Richtung außenliegenden Position, in der Art, dass dieser mit seiner innenseitigen Oberfläche über den radial darunter liegenden Umschlingungskörper oder Schraubenfeder einen zusätzlichen Radialdruck auf die Oberfläche der Welle ausübt. Da die ersten Windungen die größten Reibschlusskräfte erzeugen, begünstigt eine solche radial mehrfache Anordnung das Verhältnis zwischen axialer Baugröße und Positionseinhaltevermögen. Neben der Effizienzsteigerung erfolgt durch die beschriebene radiale Mehrfachanordnung auch eine Abhängigkeitsreduzierung der Positionseinhaltungsfähigkeit vom Verhältnis der Wicklungs- zur Belastungsrichtung.

### Zeichnungen

In den Zeichnungen sind verschiedene Ausführungsbeispiele einer Vorrichtung zur Positionseinhaltung einer drehbar oder axial verschiebbar gelagerten Welle dargestellt und in der nachfolgenden Beschreibung näher erläutert. Es zeigen
Figur 1 einen Elektromotor mit einer Positionseinhaltevorrichtung schematisch,
Figur 2 eine Seitenansicht gemäß Figur 1,
Figur 3 einen Schnitt durch einen Hubmagneten eines Ausrücksystems,
Figur 4 bis Figur 6 verschiedene Ausführungsformen von Stellgliedern einer Positionseinhaltevorrichtung,
Figur 7 bis 10 verschiedene Ausführungen und Lagerungen eines Umschlingungskörpers,
Figur 11 eine räumliche Anordnungen des Ausrücksystems als technischer Hintergrund zur Erfindung
Figur 12 ein Ausführungsbeispiel einer räumlichen Anordnung des Ausrücksystems
Figur 13 eine erfindungsgemäße räumliche Anordnung des Ausrücksystems, und
Figur 14 ein Ausführungsbeispiel mit zwei übereinander angeordneten Umschlingunsgskörpern.

### Beschreibung

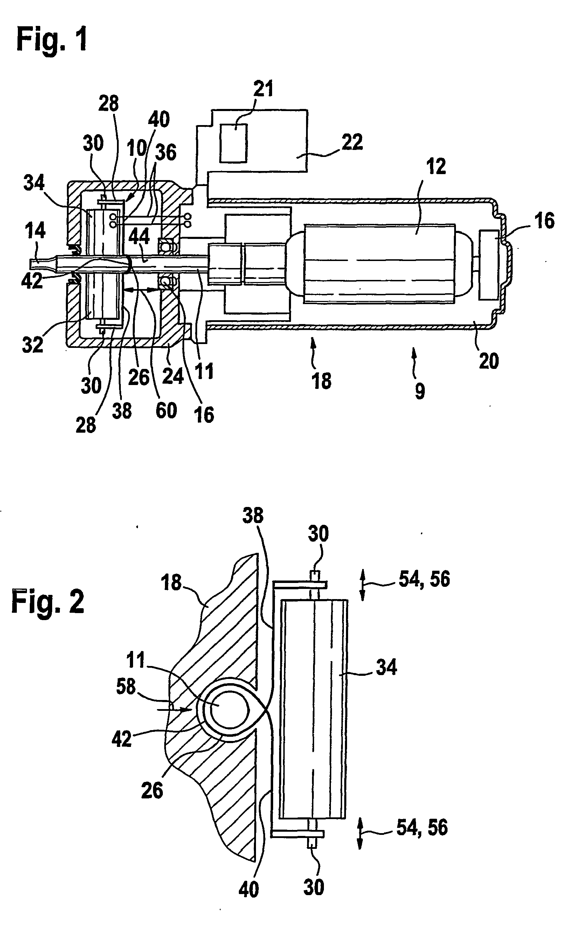

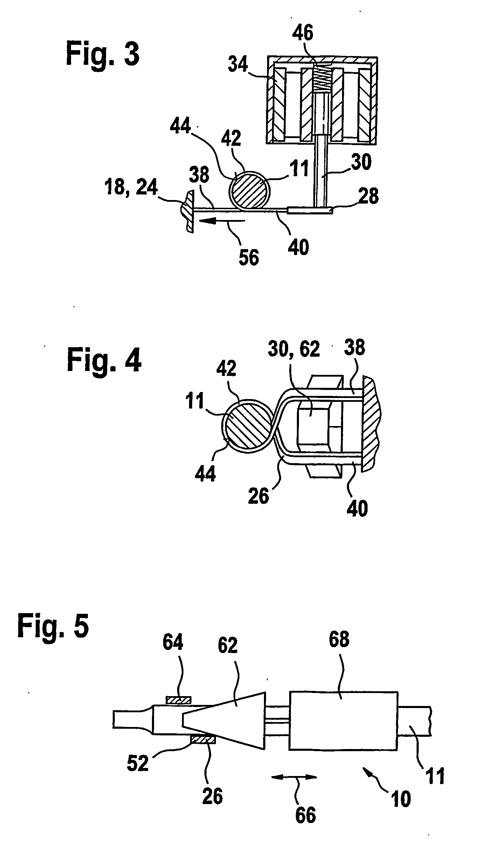

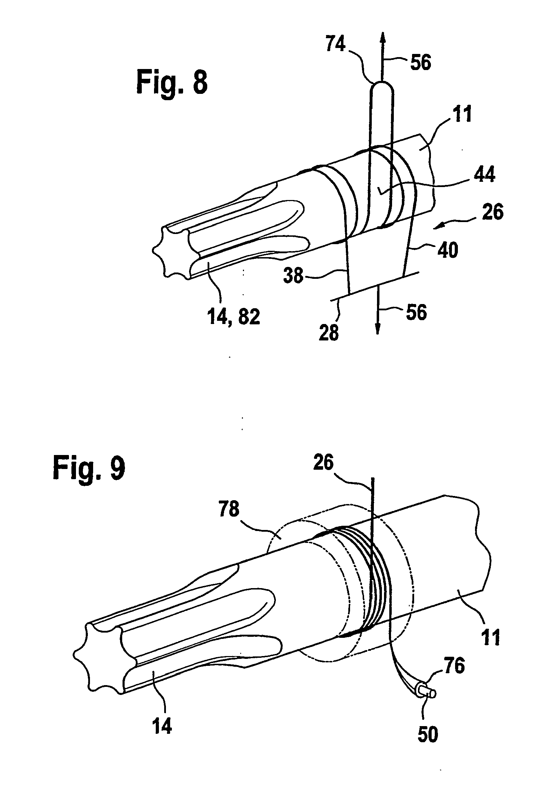

In Figur 1 ist ein elektromotorischer Verstellantrieb 9, beispielsweise zum Verstellen von beweglichen Teilen im Kraftfahrzeug, mit einem Anker 12 und einem Abtriebselement 14 dargestellt. Der Anker 12 ist auf einer Ankerwelle 11 angeordnet, die mittels Lager 16 in einem Gehäuse 18 der Antriebsvorrichtung 9 gelagert ist. Das Gehäuse 18 umfasst beispielsweise einen Potopf 20 für den Anker 12, ein Elektronikgehäuse 22 für eine entsprechende Elecktronikeinheit 21 und ein Getriebe 24 zur Aufnahme von Getriebebauteilen. Um den Motor 9 jederzeit in jeder beliebigen Stellung verriegeln zu können, ist um die Ankerwelle 11 ein Umschlingungskörper 26 gewickelt, der über Verbindungselemente 28 mit Stellgliedern 30 verbunden ist, die mittels eines Ausrücksystems 32 elektrisch verstellbar sind. Das Ausrücksystem 32 weist in Figur 1 einen Doppelhubmagneten 34 auf, der mittels elektrischen Anschlüssen 36 mit der Elektronikeinheit 21 verbunden ist, die die Stromzufuhr des Hubmagneten 34 herstellen oder unterbrechen kann. Werden beispielsweise bei einer elektrischen Aktivierung des Doppelhubmagneten 34 die beiden Stellglieder 30 radial nach außen gedrückt, werden die beiden Enden 38, 40 des Umschlingungskörpers 26 ebenfalls in entgegengesetzter Richtung radial nach außen ausgelenkt, wodurch sich der eine Schlinge 42 bildende Umschlingungskörper 26 zuzieht und einen Reibschluss mit einer Oberfläche 44 der Ankerwelle 11 bildet. Wird die Stromzufuhr unterbrochen, stellen im Hubmagnet 34 angeordnete Rückstellfedern 46 die Stellglieder 30 zurück, wodurch sich die Schlinge 42 weitet, so dass sich die Ankerwelle 11 wieder ungestört innerhalb des Umschlingungskörpers 26 drehen kann. Der Umschlingungskörper 26 ist beispielsweise als Schraubenfeder 48 aus metallischem Federdraht hergestellt, der beispielsweise einen kreisförmigen Querschnitt 50 (Figur 9) oder einen viereckigen Querschnitt 52 (Figur 5) aufweist.

In einer alternativen Ausführung kann das Funktionsprinzip der Positionseinhaltevorrichtung auch umgekehrt werden, indem im unbestromten Zustand das Ausrücksystem 32 den Umschlingungskörper 26 im Reibschluss zur Oberfläche 44 der Ankerwelle 11 hält und im elektrisch aktiven Zustand der Reibschluss aufgehoben wird.

Figur 2 zeigt die gleiche Vorrichtung in einer Seitenansicht, wobei hier die Schlinge 42 des Umschlingungskörpers 26 im Gehäuse 18 derart geführt wird, dass die Schlinge 42 im entspannten Zustand nicht an der Welle 11 schleift. Der Hubmagnet 34 ist derart angeordnet, dass auf die Verbindungselemente 28 des Umschlingungskörpers 26 eine Druckkraft 54 wirkt, um einen Reibschluss herzustellen, und die entsprechenden Rückstellelemente 46 die Stellglieder 30 wieder zurückziehen. Ist das Ausrücksystem 32 radial beabstandet neben der Welle 11 angeordnet, tritt beim Zuziehen des Umschlingungskörpers 26 zusätzlich eine resultierende Radialkraft 58 auf, die die Welle 11 über einen Hebel 60 gegenüber dem Lager 16 verkippt.

In Figur 3 ist das erste Ende 38 des Umschlingungskörpers 26 fest am Gehäuse 18 befestigt und nur das zweite Ende 40 mit dem Stellglied 30 eines einfachen Hubmagneten 34 verbunden. Hierbei wird die Zugkraft 56 vom Gehäuse 18 aufgenommen, wodurch sich allerdings der Verstellweg des Stellglieds 30 entsprechend verlängert, um eine entsprechende Haftreibung zwischen der Schlinge 42 und der Oberfläche 44 herzustellen. Das Stellglied 30 wird zur Betätigung der Motorbremse in den bestromten, im Schnitt dargestellten Elektro-Magneten 34 hineingezogen. Zur Lösung der Positionshaltevorrichtung 10 wird das Stellglied 30 nach Abschalten des Stroms mittels der Rückstellfeder 46 wieder aus dem Magneten 34 herausgedrückt.

In Figur 4 ist das Stellglied 30 als Keil 62 ausgebildet, der zwischen die beiden fixierten Enden 38, 40 des Umschlingungskörpers 26 geschoben wird. Der Umschlingungskörper 26 ist hier beispielsweise als Flachband 64 ausgebildet, das in Abhängigkeit der Position des Keils 62 mehr oder weniger stark gegen die Oberfläche 44 der Welle 11 zur Herstellung eines Reibschluss gepresst wird.

Wie in Figur 5 dargestellt, wird der Keil 62 beispielsweise mittels eines elektrischen Aktuators 68 verstellt, der das Stellglied 30 entweder aktiv in beide Richtungen 66 verstellt, oder Stellglied 30 in eine Richtung ebenfalls mittels eines Rückstellelements 46 zurückgestellt wird.

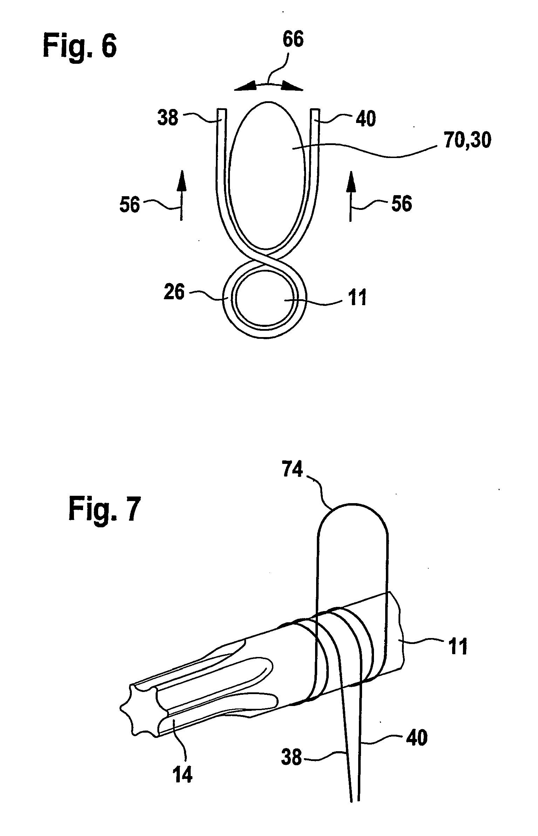

In Figur 6 ist das Stellglied 30 als Exzenterscheibe 70 ausgebildet, die durch eine Drehung durch das Ausrücksystem 31 ebenfalls eine Zugkraft 56 an den beiden Enden 38 und 40 des Umschlingungskörpers 26 erzeugt, wodurch ein Reibschluss zwischen der Schlinge 42 und der Oberfläche 44 hergestellt wird. Der Schlingkörper 26 weist auch hier elastische Eigenschaften auf, die bei einer Rückstellung der Exzenterscheibe 70 (aktiv oder durch Rückstellfedern 46) eine Lösung der Schlinge 42 - und damit einen Freilauf der Welle 11 bewirken.

Figur 7 zeigt als Umschlingungskörper 26 ein Doppelschlingband 72, das derart um die Welle 11 geschlungen ist, dass sich sowohl zwei freie Enden 38 und 40, als auch ein als Schleife 74 ausgebildetes drittes Ende 74 ergeben. Eine solche Anordnung kann mit einem Ausrücksystem 32 analog zu den Figuren 1 bis 6 kombiniert werden, wobei hier zur Erzeugung eines Reibschluss einerseits an dem Schleifenende 74 und andererseits gleichzeitig an den beiden freien Ende 38 und 40 eine Zugkraft 56 aufgebracht werden muss. Wird beispielsweise die Schleife 74 gehäusefest fixiert, halbiert sich nach dem Seilzug-Prinzip die aufzuwendende Zugkraft 56 an den beiden freien Enden 38 und 40. Die Ankerwelle 11 weist als Abtriebselement 14 ein Ritzel 82 auf, das beispielsweise ein nicht dargestelltes Zahnrad aufnehmen kann, das über eine ebenfalls nicht dargestellte Mechanik ein bewegliches Teil verstellen kann.

In einer Variation des Ausführung gemäß Figur 8 sind die beiden freien Enden 38 und 40 durch die Schleife 74 des dritten Endes durchgezogen, wodurch sich die axiale Ausdehnung eines solchen Schleifenbandes 72 reduziert. Auch hier können wahlweise die Enden 38 und 40, sowie 74 teilweise am Gehäuse 18 fixiert, oder an allen Enden mittels eines Stellglieds 30 gezogen oder geschoben werden.

In einer weiteren Ausführung gemäß Figur 9 weist das Schlingband 72 um den kreisförmigen Drahtkern 50 eine Ummantelung 76 auf, die einen hohen Reibkoeffizienten aufweist. Diese kann beispielsweise durch Vulkanisieren aufgebracht werden, da bei diesem Verfahren eine gute Haftung zwischen dem Kern 50 und dem Reibbelag 76 gewährleistet ist. Alternativ oder zusätzlich ist in einer Variation die Oberfläche der Welle 11 mit einem Material oder einer Oberflächenstruktur 78 mit erhöhter Reibung - vorzugsweise mit einer drehfesten Gummihülse - ausgebildet.

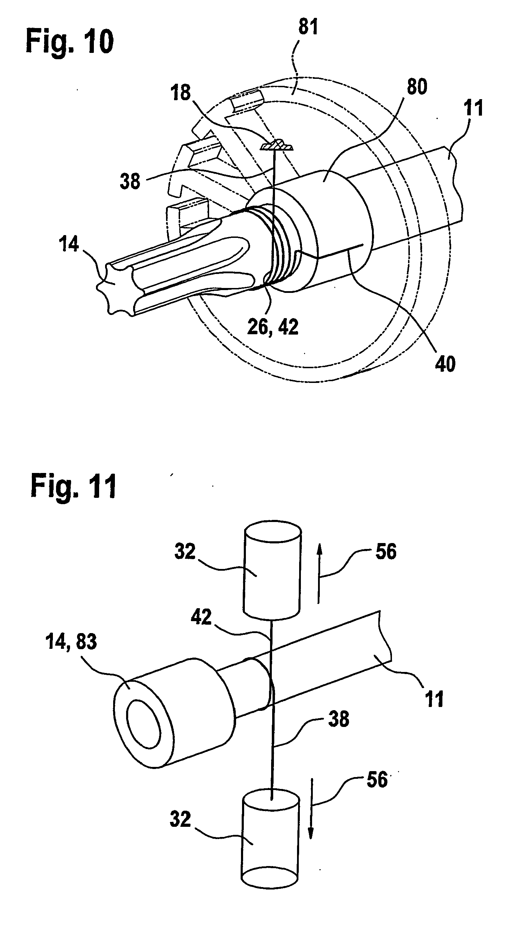

Figur 10 zeigt ein elektromotorisch betätigtes Stellglied 80, das drehbar auf der Welle 11 gelagert ist. Hierbei ist beispielsweise ein Ende 38 des Umschlingungskörpers 26 am Gehäuse 18 fixiert und das zweite Ende 40 am Radialstellglied 80 befestigt. Zur Erzeugung eines Reibschlusses ist auf dem Radialstellglied 80 ein Ankerpaket 82 angeordnet, das mittels nicht dargestellten Elektromagneten in Drehung versetzt werden kann, wodurch das zweite, mit dem Radialstellglied 80 befestigte Ende 40, um die Welle 11 mitgedreht wird, wodurch sich die Schlinge 42 zuzieht. Auch hier kann der Reibschluss wahlweise im elektrisch aktiven oder im nichtaktiven Zustand hergestellt werden. Um die axiale Ausdehnung der Positionseinhaltevorrichtung 10 zu reduzieren, kann der Schlingkörper 26 auch innerhalb des Radialstellglieds 80 angeordnet werden.

Figur 11 zeigt ein weiteres Ausführungsbeispiel, bei dem die beiden Ausrücksysteme 32 radial bzw. tangential gegenüberliegend zur Welle 11 angeordnet sind, wobei die beiden Enden 38 und 40 auf einer gemeinsamen Geraden liegen. Hierdurch wird keine resultierende Kraft 58 auf die Welle 11 erzeugt. Die Welle 11 weist als Abtriebselement 14 beispielsweise ein Reibrad 83 auf das mittels der Sperrvorrichtung 10 in einer bestimmten Position gehalten werden kann. Die beiden Ausrücksysteme 32 liegen in einer gemeinsamen radialen Ebene, so dass auf Kosten der radialen Ausdehnung axialer Bauraum eingespart wird.

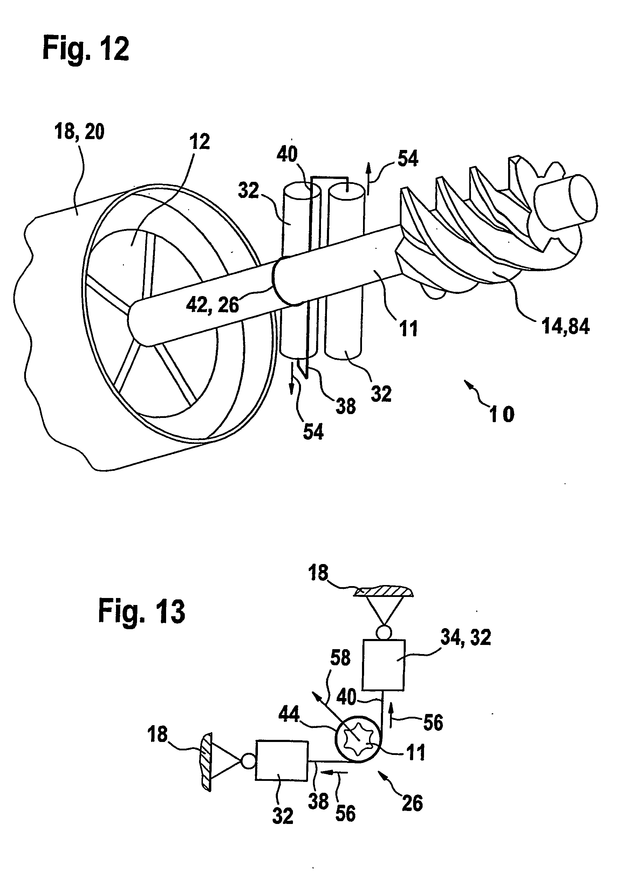

Im Ausführungsbeispiel gemäß Figur 12 sind zwei Ausrücksysteme 32 axial nebeneinander zur Ankerwelle 11 angeordnet. Hierdurch wird der radiale Bauraum auf Kosten der axialen Ausdehnung reduziert. Die Ankerwelle 11 weist hier als Abtriebselement 14 beispielsweise eine Schnecke 84 auf, deren Wirkungsgrad aufgrund der zusätzlichen Sperrvorrichtung 10 weit höher ausgebildet sein kann, als bei einem selbsthemmenden Schneckengetriebe.

Figur 13 zeigt eine weitere Variation eines Ausführungsbeispiels, bei dem die beiden Ausrücksysteme 32 in der radialen Ebene in einem von 180° abweichenden Winkel - beispielsweise etwa unter 90° - angeordnet sind. Die Ausrücksysteme 32 sind am Gehäuse 18 befestigt, so dass bei einem Auslenken der beiden Enden 38 und 40 durch die Stellglieder 30 eine resultierende Kraft 58 in radialer Richtung auf die Welle 11 wirkt. Dieser Effekt wird dazu verwendet, ein zusätzliches Verkipp-Moment der Welle 11 gegenüber einem Lager 16 über den Hebelarm 60 zu erzeugen, wodurch die Welle 11 zusätzlich in ihrer Drehung gehemmt wird.

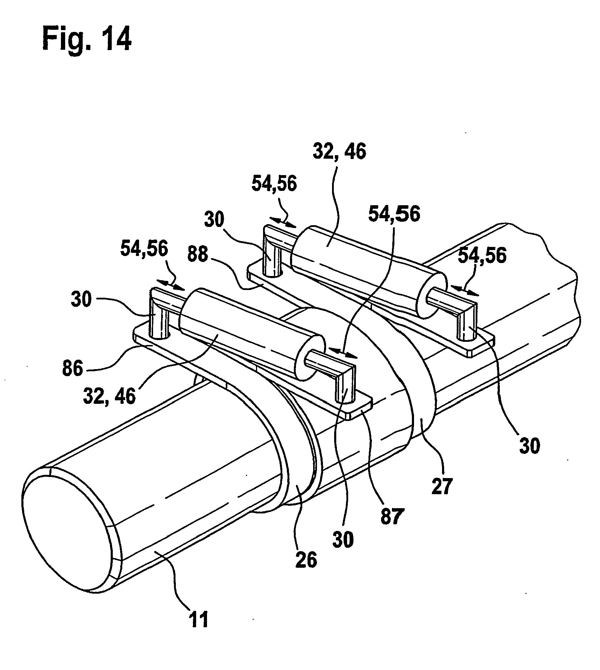

In Figur 14 ist eine Anordnung mit zwei gegensinnig gewickelten Umschlingungskörpern 26 dargestellt. Der erste Umschlingungskörper 26 befindet sich mit seiner innenseitigen Oberfläche in direkter Wirknähe zur Mantelfläche der Welle 11. Ein zweiter Umschlingungskörper 27, umschließt den ersten zumindest teilweise an einer axial identischen Position. In der dargestellten Form besitzt der Umschlingungskörper 27 eine um die Windungszahl Zwei reduzierte Umschlingungslänge. Dies gestattet die besonders effiziente Wirkanordnung von zwei Ausrücksystemen 32 bzw. von zwei Rückstellelementen 46 in einer Wirkkette mit den Stellgliedern 30 zu den jeweils windungsbeginnenden Enden 86, 88 und den windungsauslaufenden Enden 87, 89 der beiden koaxialen Umschlingungskörper 26 und 27. Unterschiedliche Querschnittsbreiten, ggf. auch veränderlich über die Umschlingungslänge, ermöglichen diese Anordnung auch bei identischen Windungszahlen. Ebenso ist eine getrennte Krafteinleitung 54, 56 ohne die zuvor beschriebene Wirkkette im speziellen Anwendungsfall denkbar. Die Anzahl der Umschlingungskörper kann in der gezeigten Weise, insbesondere bei biegeweicher Querschnittsgestaltung in Kombination mit hohem Querschubverformungsvermögen der einzelnen Umschlingungskörper, weiter gesteigert werden.

Es sei angemerkt, dass hinsichtlich der in allen Figuren gezeigten Ausführungsbeispiele vielfältige Kombinationsmöglichkeiten der einzelnen Merkmale untereinander möglich sind. So kann beispielsweise der Querschnitt 50, 52, sowie die geometrische Anordnung sowohl der Schraubenfeder 48, als auch des Schlingbandes 72 beliebig variiert werden. Des weiteren ist die Anzahl der Stellglieder 30, sowie deren Antriebsmechanismus variabel. So können die Stellglieder 30 beispielsweise magnetisch, elektrisch, pneumatisch oder hydraulisch verstellt werden, wobei der Verstellweg für die Enden 38, 40 des Umschlingungskörpers 26 als Linearbewegung oder Drehbewegung ausgeführt werden kann. Die Erfindung findet vorzugsweise Anwendung für eine Motorbremse in Verstellantrieben, ist jedoch nicht auf das Festhalten von Ankerwellen 11 beschränkt, sondern kann für beliebige Wellen oder Zylinder in verschiedenen Getriebevorrichtungen verwendet werden. So können beispielsweise auch axial ausrückbare Zylinder 11 oder Arbeitshubmagnete mittels des Umschlingungskörpers 26 in einer bestimmten axialen Position gehalten werden. Ebenso kann der Umschlingungskörper 26 innerhalb einer Hohlwelle 11 angeordnet werden, so dass diese mittels eines radial nach außen gerichteten Anpressdrucks in einer bestimmten Position gehalten werden kann. Die Vorrichtung eignet sich in gleicher Weise für Wellen von elektrisch kommutierten Motoren, wie auch von Kommutatormotoren mit Bürsten, sowie von elektrischer Maschinen aller Art.

## Patentansprüche

1. Vorrichtung (10) zur Positionseinhaltung einer drehbar oder axial verschiebbar gelagerten, eine Oberfläche (44) aufweisenden Welle (11), insbesondere einer Ankerwelle (11) eines Elektromotors (9), wobei um die Welle (11) ein Umschlingungskörper (26) angeordnet ist, der zur Ausbildung eines Reibschlusses zwischen dem Umschlingungskörper (26) und der Oberfläche (44) der Welle (11) mit einer Kraft (54, 56) beaufschlagbar ist, wobei die Kraft (54, 56) zur Positionseinhaltung von einem aktiv betätigbarem Stellglied (30, 62, 70, 80) aufgebracht wird, das zumindest mit einem Ende (38, 40, 74) des Umschlingungskörpers (26) verbunden ist, **dadurch gekennzeichnet, dass** das mindestens eine Ende (38, 40, 74) und mindestens ein weiteres Ende (38, 40, 74) des Umschlingungskörpers (26) derart mit der Kraft (54, 56) zur Ausbildung des Reibschlusses beaufschlagt werden, dass eine resultierende Radialkraft (58) erzeugt wird, die die Welle (11) gegen eine Lagerstelle (16) der Welle (11) verspannt, wodurch die Welle (11) mittels eines zusätzlichen Haltemoments an ihrer Drehung gehindert wird.

2. Vorrichtung (10) nach Anspruch 1, **dadurch gekennzeichnet, dass** der Umschlingungskörper (26) als Schlingband (72) oder Schraubenfeder (48) mit mindestens zwei Enden (38, 40, 74) ausgebildet ist.

3. Vorrichtung (10) nach einem der Ansprüche 1 oder 2, **dadurch gekennzeichnet, dass** der Umschlingungskörper (26) und/oder die Oberfläche (44) der Welle (11) ein Material (78) mit erhöhtem Haftreibungskoeffizienten, insbesondere eine gummiartige Ummantelung (76), aufweist.

4. Vorrichtung (10) nach einem der vorhergehenden Ansprüche, **dadurch gekennzeichnet, dass** der Umschlingungskörper (26) als Doppel-Schlingband (72) mit zwei freien Enden (38, 40) und einer Schleife (74) als drittem Ende (74) ausgebildet ist.

5. Vorrichtung (10) nach Anspruch 4, **dadurch gekennzeichnet, dass** die beiden freien Enden (38, 40) axial innerhalb der Schleife (74) des dritten Endes (74) angeordnet sind.

6. Vorrichtung (10) nach einem der vorhergehenden Ansprüche, **dadurch gekennzeichnet, dass** der Umschlingungskörper (26) aus Runddraht (50) oder Flachband (64) gefertigt ist.

7. Vorrichtung (10) nach einem der vorhergehenden Ansprüche, **dadurch gekennzeichnet, dass** das Stellglied (30, 62, 70, 80) von einem Ausrücksystem (32) betätigt wird, das einen elektrischen oder pneumatischen oder hydraulischen Antrieb (81) mit einem Hubmagneten (34) oder einem chemischen oder Formgedächtnis-Aktuator (68) aufweist.

8. Vorrichtung (10) nach einem der vorhergehenden Ansprüche, **dadurch gekennzeichnet, dass** das Ausrücksystem (32) einen Doppelhub mit zwei Stellgliedern (30, 62, 70, 80) aufweist, die gleichzeitig mindestens zwei Enden (38, 40, 74) des Umschlingungskörpers (26) - insbesondere symmetrischen - auslenken.

9. Vorrichtung (10) nach einem der vorhergehenden Ansprüche, **dadurch gekennzeichnet, dass** das mindestens eine Stellglied (30) als Keil (62) oder Exzenterrad (70) ausgebildet ist, das mindestens ein Ende (38, 40, 74) des Umschlingungskörpers (26) auslenkt.

10. Vorrichtung (10) nach einem der vorhergehenden Ansprüche, **dadurch gekennzeichnet, dass** das mindestens eine Stellglied (30, 62, 70, 80) eine Linearbewegung oder eine Drehbewegung - insbesondere eine Drehung auf der Welle (11) - zum Auslenken des mindestens einen Ende (38, 40, 74) ausführt.

11. Vorrichtung (10) nach einem der vorhergehenden Ansprüche, **dadurch gekennzeichnet, dass** der Reibschluß durch das Zuziehen des Umschlingungskörpers (26) mittels einem Einwirken einer Zugkraft (56) oder einer Druckkraft (54) auf die Enden (38, 40, 74) bewirkt wird.

12. Vorrichtung (10) nach einem der vorhergehenden Ansprüche, **dadurch gekennzeichnet, dass** mindestens ein Ende (38, 40, 74) des Umschlingungskörpers (26) an einem Gehäuseteil (18, 20, 22, 24) der Wellenlagerung (16) befestigt ist.

13. Vorrichtung (10) nach einem der vorhergehenden Ansprüche, **dadurch gekennzeichnet, dass** das Ausrücksystem (32) ein Rückstellelement (46) aufweist, das so angeordnet ist, dass bei aktiviertem (bestromtem) Ausrücksystem (32) ein Reibschluß zwischen der Oberfläche (44) und dem Umschlingungskörper (26) verhindert wird.

14. Vorrichtung (10) nach einem der vorhergehenden Ansprüche, **dadurch gekennzeichnet, dass** das Rückstellelement so angeordnet ist, dass bei aktiviertem (bestromtem) Ausrücksystem (32) ein Reibschluß zwischen der Oberfläche (44) und dem Umschlingungskörper (26) hergestellt wird.

15. Vorrichtung (10) nach einem der vorhergehenden Ansprüche, **dadurch gekennzeichnet, dass** zwei Ausrücksysteme (32) - beispielsweise zwei elektrische Hubmagneten (34) - axial nebeneinander zur Welle (11), oder in einer radialen Ebene angeordnet sind.

16. Vorrichtung (10) nach einem der vorhergehenden Ansprüche, **dadurch gekennzeichnet, dass** der Umschlingungskörper (26) durch mindestens einen weiteren Umschlingungskörper (27) radial zumindest teilweise umschlossen wird.

17. Vorrichtung (10) nach Anspruch 16, **dadurch gekennzeichnet, dass** die Umschlingungskörper (26, 27) gegensinnige Wicklungsrichtungen aufweisen und mindestens ein windungsbeginnendes Ende (86, 88) mit einem windungsauslaufenden Ende (87, 89) mittels der Stellglieder (30) und dem Ausrücksystem (32) verbunden ist.

## Claims

1. Device (10) for maintaining the position of a rotatably or axially displaceably mounted shaft (11) having a surface (44), in particular of an armature shaft (11) of an electric motor (9), there being arranged around the shaft (11) a looping body (26) which can be acted upon with a force (54, 56) in order to generate a frictional connection between the looping body (26) and the surface (44) of the shaft (11), the force (54, 56) for maintaining position being applied by an actively actuable actuating member (30, 62, 70, 80) which is connected at least to one end (38, 40, 74) of the looping body (26), **characterized in that** the at least one end (38, 40, 74) and at least one further end (38, 40, 74) of the looping body (26) are acted upon with the force (54, 56) for generating the frictional connection, in such a way as to generate a resultant radial force (58) which braces the shaft (11) against a bearing point (16) of the shaft (11), with the result that the shaft (11) is prevented from rotating by means of an additional holding moment.

2. Device (10) according to Claim 1, **characterized in that** the looping body (26) is designed as a wrap-around band (72) or helical spring (48) having at least two ends (38, 40, 74).

3. Device (10) according to either one of Claims 1 and 2, **characterized in that** the looping body (26) and/or the surface (44) of the shaft (11) have/has a material (78) with an increased coefficient of static friction, in particular a rubber-like sheathing (76).

4. Device (10) according to one of the preceding claims, **characterized in that** the looping body (26) is designed as a double wrap-around band (72) with two free ends (38, 40) and with a loop (74) as a third end (74).

5. Device (10) according to Claim 4, **characterized in that** the two free ends (38, 40) are arranged axially within the loop (74) of the third end (74).

6. Device (10) according to one of the preceding claims, **characterized in that** the looping body (26) is manufactured from round wire (50) or flat band (64).

7. Device (10) according to one of the preceding claims, **characterized in that** the actuating member (30, 62, 70, 80) is actuated by a release system (32) which has an electric or pneumatic or hydraulic drive (81) with a lifting magnet (34) or with a chemical or form memory actuator (68).

8. Device (10) according to one of the preceding claims, **characterized in that** the release system (32) has a double lift with two actuating members (30, 62, 70, 80) which simultaneously deflect at least two ends (38, 40, 74) of the looping body (26), in particular symmetrically.

9. Device (10) according to one of the preceding claims, **characterized in that** at least one actuating member (30) is designed as a wedge (62) or eccentric wheel (70) which deflects at least one end (38, 40, 74) of the looping body (26).

10. Device (10) according to one of the preceding claims, **characterized in that** the at least one actuating member (30, 62, 70, 80) executes a linear movement or a rotational movement, in particular a rotation on the shaft (11), for deflecting the at least one end (38, 40, 74).

11. Device (10) according to one of the preceding claims, **characterized in that** the frictional connection is brought about as a result of the tightening of the looping body (26) by means of the action of a tensile force (56) or of a compressive force (54) upon the ends (38, 40, 74).

12. Device (10) according to one of the preceding claims, **characterized in that** at least one end (38, 40, 74) of the looping body (26) is fastened to a housing part (18, 20, 22, 24) of the shaft mounting (16).

13. Device (10) according to one of the preceding claims, **characterized in that** the release system (32) has a restoring element (46) which is arranged such that, when the release system (32) is activated (live), a frictional connection between the surface (44) and the looping body (26) is prevented.

14. Device (10) according to one of the preceding claims, **characterized in that** the restoring element is arranged such that, when the release system (32) is activated (live), a frictional connection between the surface (44) and the looping body (26) is made.

15. Device (10) according to one of the preceding claims, **characterized in that** two release systems (32), is for example two electrical lifting magnets (34), are arranged axially next to one another with respect to the shaft (11) or in one radial plane.

16. Device (10) according to one of the preceding claims, **characterized in that** the looping body (26) is at least partially surrounded radially by at least one further looping body (27).

17. Device (10) according to Claim 16, **characterized in that** the looping bodies (26, 27) have contradirectional winding directions, and at least one turn-commencing end (86, 88) is connected to a turn-terminating end (87, 89) by means of the actuating members (30) and the release system (32).

## Revendications

1. Dispositif (10) pour maintenir en position un arbre (11) monté de manière rotative ou déplaçable axialement, présentant une surface (44), notamment un arbre d'induit (11) d'un moteur électrique (9), un corps d'enveloppement (26) étant disposé autour de l'arbre (11), lequel peut être sollicité par une force (54, 56) pour réaliser un engagement par friction entre le corps d'enveloppement (26) et la surface (44) de l'arbre (11), la force (54, 56) étant appliquée pour maintenir la position par un actionneur pouvant être actionné activement (30, 62, 70, 80), qui est connecté au moins à une extrémité (38, 40, 74) du corps d'enveloppement (26), **caractérisé en ce que** l'au moins une extrémité (38, 40, 74) et au moins une autre extrémité (38, 40, 74) du corps d'enveloppement (26) sont sollicitées par la force (54, 56) pour réaliser l'engagement par friction de telle sorte qu'une force radiale résultante (58) soit produite, laquelle serre l'arbre (11) contre un point de palier (16) de l'arbre (11), de sorte qu'un couple de retenue supplémentaire empêche la rotation de l'arbre (11).

2. Dispositif (10) selon la revendication 1, **caractérisé en ce que** le corps d'enveloppement (26) est réalisé sous forme de bande d'enveloppement (72) ou de ressort à boudin (48) avec au moins deux extrémités (38, 40, 74).

3. Dispositif (10) selon l'une quelconque des revendications 1 ou 2, **caractérisé en ce que** le corps d'enveloppement (26) et/ou la surface (44) de l'arbre (11) présentent un matériau (78) de coefficient de friction d'adhérence accru, en particulier une enveloppe (76) de type caoutchouc.

4. Dispositif (10) selon l'une quelconque des revendications précédentes, **caractérisé en ce que** le corps d'enveloppement (26) est réalisé sous forme de bande d'enveloppement double (72) avec deux extrémités libres (38, 40) et une boucle (74) servant de troisième extrémité (74).

5. Dispositif (10) selon la revendication 4, **caractérisé en ce que** les deux extrémités libres (38, 40) sont disposées axialement à l'intérieur de la boucle (74) de la troisième extrémité (74).

6. Dispositif (10) selon l'une quelconque des revendications précédentes, **caractérisé en ce que** le corps d'enveloppement (26) est fabriqué sous forme de fil métallique rond (50) ou de bande plate (64).

7. Dispositif (10) selon l'une quelconque des revendications précédentes, **caractérisé en ce que** l'actionneur (30, 62, 70, 80) est actionné par un système de débrayage (32), qui présente un entraînement électrique ou pneumatique ou hydraulique (81) avec un aimant de levage (34) ou un actionneur chimique ou à mémoire de forme (68).

8. Dispositif (10) selon l'une quelconque des revendications précédentes, **caractérisé en ce que** le système de débrayage (32) présente une double course avec deux actionneurs (30, 62, 70, 80) qui dévient simultanément au moins deux extrémités (38, 40, 74) du corps d'enveloppement (26) - notamment de manière symétrique.

9. Dispositif (10) selon l'une quelconque des revendications précédentes, **caractérisé en ce que** l'au moins un actionneur (30) est réalisé sous forme de clavette (62) ou de roue d'excentrique (70) qui dévie au moins une extrémité (38, 40, 74) du corps d'enveloppement (26).

10. Dispositif (10) selon l'une quelconque des revendications précédentes, **caractérisé en ce que** l'au moins un actionneur (30, 62, 70, 80) effectue un mouvement linéaire ou un mouvement de rotation - en particulier une rotation sur l'arbre (11) pour dévier l'au moins une extrémité (38, 40, 74).

11. Dispositif (10) selon l'une quelconque des revendications précédentes, **caractérisé en ce que** l'engagement par friction est provoqué par la traction du corps d'enveloppement (26) au moyen de l'application d'une force de traction (56) ou d'une force de pression (54) sur les extrémités (38, 40, 74).

12. Dispositif (10) selon l'une quelconque des revendications précédentes, **caractérisé en ce qu'**au moins une extrémité (38, 40, 74) du corps d'enveloppement (26) est fixée sur une partie de boîtier (18, 20, 22, 24) du support de palier d'arbre (16).

13. Dispositif (10) selon l'une quelconque des revendications précédentes, **caractérisé en ce que** le système de débrayage (32) présente un élément de rappel (46), qui est disposé de telle sorte que lorsque le système de débrayage (32) est activé (alimenté en courant), un engagement par friction entre la surface (44) et le corps d'enveloppement (26) est empêché.

14. Dispositif (10) selon l'une quelconque des revendications précédentes, **caractérisé en ce que** l'élément de rappel est disposé de telle sorte que lorsque le système de débrayage (32) est activé (alimenté en courant), un engagement par friction entre la surface (44) et le corps d'enveloppement (26) est établi.

15. Dispositif (10) selon l'une quelconque des revendications précédentes, **caractérisé en ce que** deux systèmes de débrayage (32) - par exemple deux aimants de levage électriques (34) - sont disposés axialement l'un à côté de l'autre par rapport à l'arbre (11), ou dans un plan radial.

16. Dispositif (10) selon l'une quelconque des revendications précédentes, **caractérisé en ce que** le corps d'enveloppement (26) est entouré radialement au moins en partie par au moins un autre corps d'enveloppement (27).

17. Dispositif (10) selon la revendication 16, **caractérisé en ce que** les corps d'enveloppement (26, 27) présentent des sens d'enroulement inverses, et au moins une extrémité de début d'enroulement (86, 88) est connectée à une extrémité de sortie d'enroulement (87, 89) au moyen de l'actionneur (30) et du système de débrayage (32).
